# EUROPÄISCHE PATENTANMELDUNG

(11) **EP 1 584 967 A1**
(43) Veröffentlichungstag der Anmeldung: **12.10.2005**
(21) Anmeldenummer: 05007688.4
(22) Anmeldetag: 07.04.2005
(51) Int. Cl.: G02C 1/02

(54) **Brillenfassung mit schraubenloser, flächenbündiger Glasbefestigung**

(30) Priorität: 08.04.2004 DE 102004018080
(71) Anmelder: Rodenstock GmbH, 80469 München (DE)
(72) Erfinder: Ruf, Peter, 75228 Ispringen (DE)

(57) **Zusammenfassung**

Die Erfindung betrifft eine randlose Brille, bestehend aus Brillenfassung und Brillengläsern.

Zur Erzielung einer flächenbündigen, schraubenlosen Glasbefestigung ist in die Vorder- oder Rückseite des Glases eine Stufe eingearbeitet, in die das ebenfalls mit einer spiegelbildlichen Stufe ausgebildete Anschlussteil des jeweiligen Trageteils der Fassung flächenbündig passt und eine stoffschlüssige und/oder formschlüssige Verbindung mit dem Glas aufweist

## Beschreibung

Die Erfindung betrifft eine randlose Brille.

### Stand der Technik

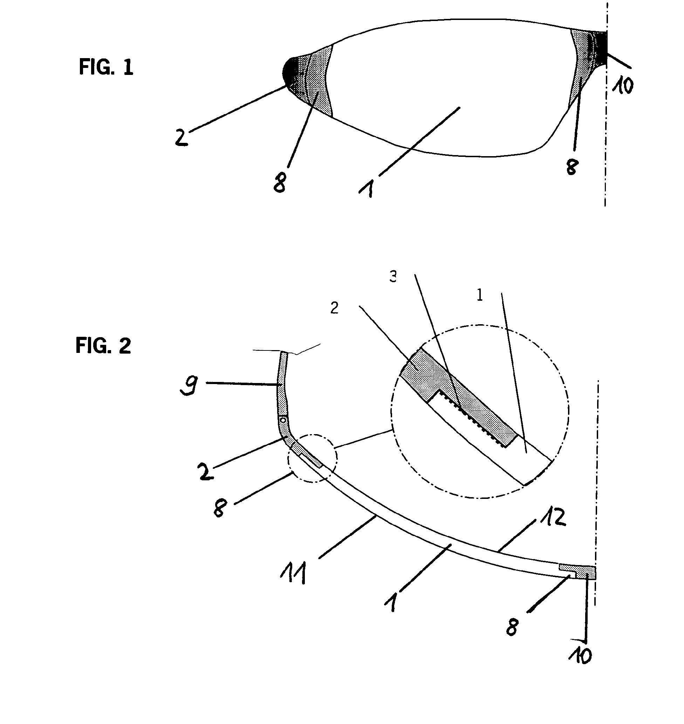

Es ist bekannt, bei randlosen Brillen die Gläser und die tragenden Fassungsteile mittels Verschraubungen, Schnappelementen, Steckverbindungen oder auch durch Kleben und Schweißen miteinander zu verbinden:
In der US-Patentschrift 6,641,265 wird mit FIG. 1 und FIG. 2 "PRIOR ART" eine gängige Schnappverbindung beschrieben und eine neue Art von Schnappverbindung (FIG. 7) vorgestellt.
In der US-Patentschrift 6,540,350 wird eine Lösung beschrieben, bei der die Gläser vom Umfang her profiliert geschlitzt werden. In diese Schlitze werden entsprechend profilierte Beschlagteile eingeschoben und verklebt oder durch eine entsprechende Passung reibschlüssig fixiert (s. Fig. 1).
In US-Patentschrift 6,199,981 findet sich eine Befestigungsmethode, bei der Stifte durch Bohrungen in den Gläsern gesteckt und ein Kopf oder eine Verdickung angeformt bzw. angeschmolzen wird.
In der EP-Patentanmeldung 1 298 482 A2 wird eine Lösung beschrieben, bei der die Beschlagteile an der Verbindungsstelle mittels Laser und einem absorbierenden Farbstoff so stark erwärmt werden, dass Gläser und Beschlagteile miteinander verschweißen.

Die meisten der hier genannten Lösungen erfordern eine relativ aufwändige Glasbearbeitung oder es lässt sich vor allem bei dünnen Gläsern kein bündiger Übergang zwischen Glas und Beschlagteil erzielen.

Es ist Aufgabe der vorliegenden Erfindung, eine schraubenlose Glasbefestigung zu schaffen, die einen bündigen Übergang zwischen Glas und Glashalteteilen erlaubt und eine sichere Befestigung der Gläser gewährleistet, die ohne Zerstören nicht lösbar ist.

Diese Aufgabe wird dadurch gelöst, dass zur Erzielung einer flächenbündigen, schraubenlosen Glasbefestigung in die Vorder- oder Rückseite eines Brillenglases eine Stufe eingearbeitet ist, in die ein ebenfalls mit einer spiegelbildlichen Stufe ausgebildetes Anschlussteil des jeweiligen Trageteils der Brillenfassung flächenbündig passt und das Anschlussteil eine stoffschlüssige und/oder formschlüssige Verbindung mit dem Brillenglas aufweist.

Gemäß der Erfindung werden die Befestigungselemente und die entsprechenden Glasflächen so gestaltet, dass sich entsprechende stufenförmige Ausnehmungen der Befestigungselement und der Gläser überlappen und durch Kleben, Ultraschallschweißen oder Einsenken mit Ultraschall (US) dauerhaft zueinander fixiert werden.

Die Erfindung betrifft also eine sportive, randlose Brillenfassung, bei der die Gläser so mit den Backen bzw. der Brücke verbunden sind, dass die Frontflächen und gegebenenfalls auch die Innenflächen der Gläser mit denen der Beschlagteile bündig sind, d. h. ohne Stufe ineinander übergehen. Erreicht wird diese durch die geometrische Gestaltung der Verbindungsflächen in Kombination mit den beschriebenen speziellen Verbindungstechniken.

Vorteilhafte Ausgestaltungen der Erfindung sind in den Unteransprüchen angegeben.

Die Erfindung wird im folgenden anhand begleitender Zeichnungen bevorzugter Ausführungsformen beispielhaft beschrieben.

Es zeigen:
- Figuren 1 und 2: ein erstes Ausführungsbeispiel.

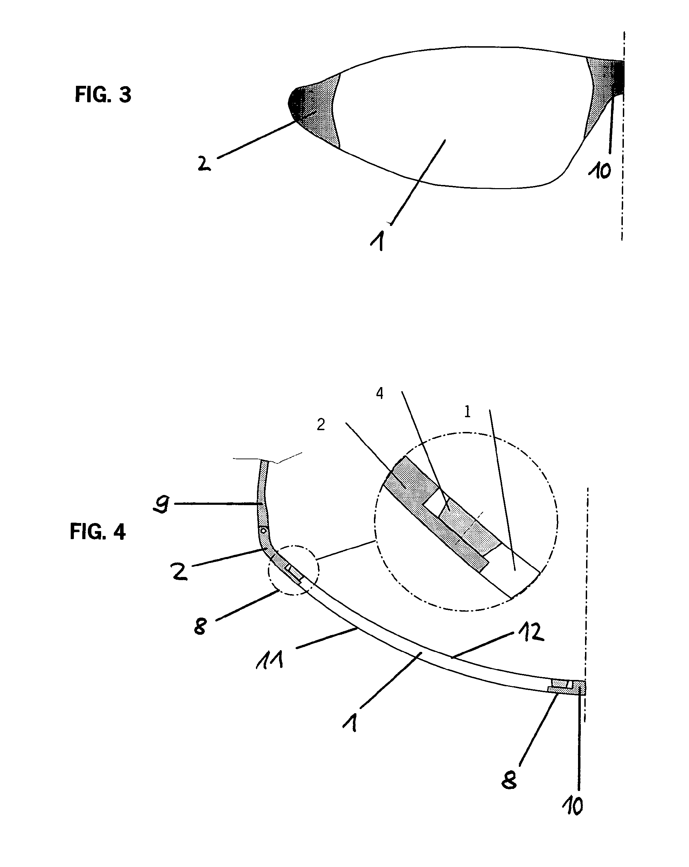

- Figuren 3 und 4: eine erste Variante eines zweiten Ausführungsbeispiels

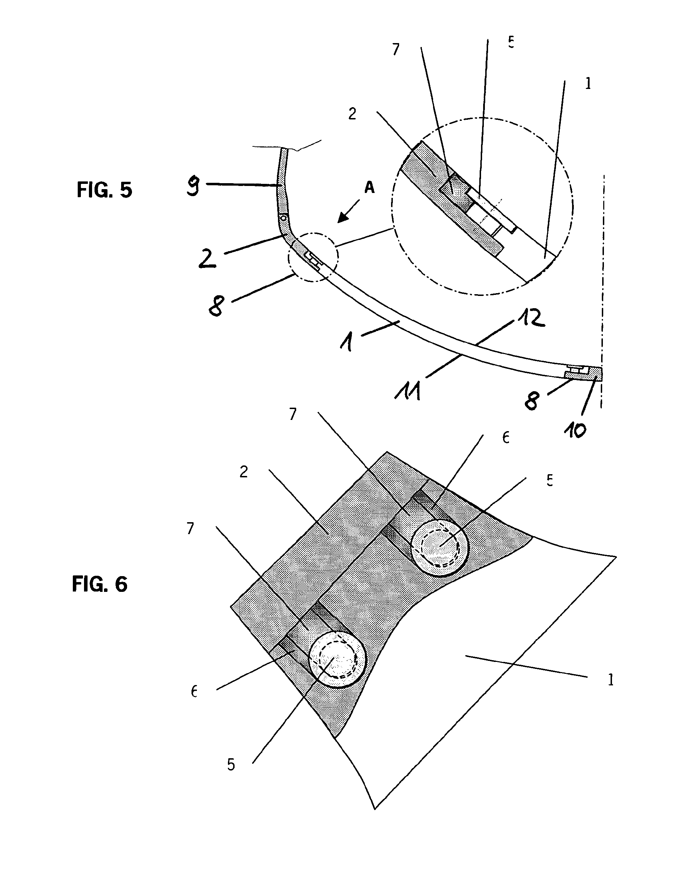

- Figuren 5 und 6: eine zweite Variante des zweiten Ausführungsbeispiels

Übereinstimmende Teile sind in den Zeichnungen mit denselben Bezugszeichen versehen.
In Fig. 1 ist die Ansicht eines Teils einer randlosen Brille von vorne, in Fig. 2 ist die Ansicht dieses Teils von oben dargestellt. Mit Bezugszeichen 1 ist ein Brillenglas benannt. Eine Brillenfassung besteht aus zwei Brillenbügeln 9 mit jeweils einer Backe 2 sowie einer Brücke 10. In den Zeichnungen ist nur ein Teil eines Brillenbügels 9 dargestellt. Brillenbügel 9, Backe 2 und Brücke 10 werden in dieser Beschreibung auch als Trageteil bezeichnet. Die Backen 2 und die Brücke 10 sind in Teilbereichen als Anschlussteil 8 ausgebildet, d.h. als Bereich, in dem Backen und Brücke mit dem Brillenglas verbunden sind.
In diesem Ausführungsbeispiel sind in die Rückfläche 12 des Brillenglases, also in die dem Auge eines Brillenträgers zugewandte Fläche des Brillenglases, in zwei Bereichen je eine Stufe eingearbeitet. Dazu ist in den Bereichen des Brillenglases, die mit dem Anschlussteil 8 der Backe 2 bzw. mit dem Anschlussteil 8 der Brücke 10 verbunden werden sollen, Glas abgetragen worden. In diesen Bereichen besitzt das Brillenglas nur noch z.B. etwa die Hälfte der ursprünglichen Glasdicke. Das Abtragen des Glases in diesen Bereichen kann auf sehr einfache Weise, z. B. durch Schleifen, erfolgen. Ein Bereich der Backe 2 ist ebenfalls stufenförmig ausgebildet. Dieser Bereich ist der Anschlussteil 8 der Backe, über den Backe 2 und Brillenglas 1 miteinander verbunden werden sollen. Die stufenförmig ausgebildeten Bereiche des Brillenglases 1 und der Backe 2 (bzw. der Brücke 10) sind zueinander spiegelbildlich, d.h., diese Bereiche passen flächenbündig ineinander. Die Verbindung zwischen Brillenglas und Backe (bzw. Brücke) kann dabei so ausgestaltet sein, dass entweder nur die Vorderfläche 11 des Brillenglases (also die dem Auge eines Brillenträgers abgewandte Seite des Brillenglases) oder nur die Rückfläche 12 des Brillenglases flächenbündig an die Backe bzw. die Brücke anschließt. Bevorzugt schließen aber sowohl Vorderfläche 11 als auch Rückfläche 12 des Brillenglases flächenbündig an die Backe bzw. die Brücke an. Flächenbündig bedeutet, dass Vorderfläche und /oder Rückfläche stufenfrei an die Backe bzw. den Bügel anschließen.
Mit Bezugszeichen 3 ist eine stoffschlüssige Verbindung benannt. Im Ausführungsbeispiel kann die Verbindung eine Klebeverbindung sein.
Die stufig ausgebildeten Bereiche des Brillenglases und der Backe sowie die stoffschlüssige Verbindung 3 sind in dem mit einem Kreis gekennzeichneten Bereich vergrößert dargestellt.

Figuren 3 und 4 zeigen eine erste Variante eines zweiten Ausführungsbeispiels. In Fig. 3 ist die Ansicht eines Teils einer Brille von vorne, in Fig. 4 ist die Ansicht dieses Teils von oben dargestellt. Mit Bezugszeichen 1 ist das Brillenglas, mit Bezugszeichen 2 ist die Backe einer Brillenfassung und mit Bezugszeichen 4 ist ein mit Ultraschall (US) eingesenktes Verbindungselement benannt. Das Verbindungselement 4 hat die Form eines geraden Kegelstumpfes, der mit seiner kleineren kreisförmigen Endfläche am Anschlussteil fixiert ist. Die Fixierung kann beispielsweise durch Löten oder Schweißen erfolgen. Es kann aber auch einstückig mit der Backe 2 ausgeführt sein.

Figuren 5 und 6 zeigen eine zweite Variante des zweiten Ausführungsbeispiels. In Fig. 5 ist die Ansicht eines Teils einer Brille von oben, in Fig. 6 ist eine Detailansicht des Bereichs A dargestellt. Mit Bezugszeichen 1 ist das Brillenglas, mit Bezugszeichen 2 sind die Backen bzw. Brücke einer Brillenfassung benannt. Am Anschlussteil 8 ist wenigstens ein T-förmiges Verbindungselement 5 fixiert. Im Ausführungsbeispiel sind zwei derartige Verbindungselemente 5 fixiert. Die Backen 2 bzw. die Brücke 10 sind mit Verbindungselementen 5 in T-förmige Nuten 6 im Glas 1 eingeschoben und mit einer Vergussmasse 7 fixiert. Die Vergussmasse bewirkt auch eine Klebung zwischen Backe (bzw. Brücke) und Brillenglas.

## Patentansprüche

1. Randlose Brille, bestehend aus einer Brillenfassung, die Brillenbügel und Trageteile umfasst, und Brillengläsern, **dadurch gekennzeichnet, dass** zur Erzielung einer flächenbündigen, schraubenlosen Glasbefestigung in die Vorderseite (11) oder Rückseite (12) eines Brillenglases (1) eine Stufe eingearbeitet ist, in die ein ebenfalls mit einer spiegelbildlichen Stufe ausgebildetes Anschlussteil (8) des jeweiligen Trageteils (2,10) der Brillenfassung flächenbündig passt und das Anschlussteil (8) eine stoffschlüssige und/oder formschlüssige Verbindung (3) mit dem Brillenglas (1) aufweist.

2. Brille entsprechend Anspruch 1, **dadurch gekennzeichnet, dass** es sich bei der Verbindung (3) um eine Klebeverbindung handelt.

3. Brille entsprechend Anspruch 1, **dadurch gekennzeichnet, dass** es sich bei der Verbindung um in das Brillenglas eingewärmte Verbindungselemente (4) handelt.

4. Brille entsprechend Anspruch 3, **dadurch gekennzeichnet, dass** das Verbindungselement (4) ein sich verjüngendes Element ist, das mit seiner kleineren Endfläche am Anschlussteil (8) fixiert ist.

5. Brille entsprechend Anspruch 1, **dadurch gekennzeichnet, dass** am Anschlussteil (8) ein T-förmiges Verbindungselement (5) fixiert ist und im Brillenglas eine T-förmige Nut ausgebildet ist, in die das T-förmige Verbindungselement (5) einschiebbar ist, wobei der nach dem Einschieben nicht durch das Verbindungselement (5) ausgefüllte Bereich der Nut (6) mittels einer Vergussmasse auffüllbar ist.

6. Brille entsprechend Anspruch 2, **dadurch gekennzeichnet, dass** der Kleber ein strahlungsaktivierbarer Kleber, ein Kleber auf Epoxidharzbasis, ein Schmelzkleber oder ein thermoplastischer Kunststoff ist.

7. Brille entsprechend Anspruch 5, **dadurch gekennzeichnet, dass** die Vergussmasse ein Klebstoff ist.

8. Brille entsprechend Anspruch 7, **dadurch gekennzeichnet, dass** die Vergussmasse eine strahlungsaktivierbare Vergussmasse, eine Vergussmasse auf Epoxidharzbasis oder ein thermoplastischer Kunststoff ist.

9. Brille nach einem der Ansprüche 1 bis 8, **dadurch gekennzeichnet, dass** das Trageteil eine Backe oder eine Brücke ist.

10. Brille nach einem der Ansprüche 1 bis 9, **dadurch gekennzeichnet, dass** das Brillenglas aus Kunststoff besteht.
